Europäisches Patentamt

European Patent Office

Office européen des brevets

(11) Veröffentlichungsnummer: **0 228 567**
B1

(12) # EUROPÄISCHE PATENTSCHRIFT

(45) Veröffentlichungstag der Patentschrift:
28.02.90

(51) Int. Cl.⁴: **H04M 19/00**

(21) Anmeldenummer: 86116295.6

(22) Anmeldetag: 24.11.86

(54) **Schaltungsanordnung zur Konstantstromspeisung der Teilnehmerleitung eines digitalen Zeitmultiplex-Fernmeldenetzes.**

(30) Priorität: 09.12.85 DE 3543470

(43) Veröffentlichungstag der Anmeldung:
15.07.87 Patentblatt 87/29

(45) Bekanntmachung des Hinweises auf die Patenterteilung:
28.02.90 Patentblatt 90/9

(84) Benannte Vertragsstaaten:
AT CH DE IT LI

(56) Entgegenhaltungen:
EP-A- 0 048 477

PATENTS ABSTRACTS OF JAPAN, Band 6,
Nr. 103 (E-112)[981], 12. Juni 1982; &
JP-A-57 35 462 (NIPPON DENKI K.K.) 26-02-1982

(73) Patentinhaber: Siemens Aktiengesellschaft,
Wittelsbacherplatz 2, D-8000 München 2(DE)

(72) Erfinder: Hamer, Jeremy, Hanfelderstrasse 17,
D-8000 München 71(DE)
Erfinder: Lechner, Robert, Dipl.-Ing., Haidfeldstrasse 5,
D-8156 Otterfing(DE)
Erfinder: Stader, Harald, Dipl.-Ing.,
Sternbergerstrasse 21, D-8000 München 71(DE)
Erfinder: Wingerath, Norbert, Dipl.-Ing.,
Zillertalstrasse 63, D-8000 München 70(DE)

ACTORUM AG

## Beschreibung

Die Erfindung betrifft eine Schaltungsanordnung zur Konstantstromspeisung der Teilnehmerleitung eines digitalen Zeitmultiplex-Fernmeldenetzes, die Bestandteil einer elektronischen Teilnehmeranschlußschaltung ist und die je nach der Länge der Teilnehmerleitung unterschiedliche Speiseversorgungsspannungen zur Verfügung stellt.

Durch bekannte Schaltungsanordnungen dieser Art wird neben einer üblichen gegen Bezugspotential Erde negativen Batteriespannung eine positive Zusatzspannung, eine sogenannte Booster-Spannung zur Verfügung gestellt. Aufgrund dieser Zusatzspannung ist es möglich, auch bei größeren Leitungslängen der Teilnehmeranschlußleitung den gewünschten Konstantstrom zu liefern. Darüber hinaus ist es möglich, im Rufzustand ein symmetrisches Rufsignal an den Adern der Teilnehmeranschlußleitung zu erzeugen.

Die Erhöhung der Versorgungsspannung hat allerdings zur Folge, daß an den Ausgangsstufen der Speiseschaltung der elektronischen Teilnehmeranschlußschaltung ein größerer Spannungsabfall auftritt, was zu einer unerwünscht hohen Verlustleistung führt.

Bei diesen bekannten Teilnehmeranschlußschaltungen wurde im genannten Zusammenhang bisher derart vorgegangen, daß aufgrund einer Messung der Länge der an die betreffende Teilnehmeranschlußleitung angeschlossenen Teilnehmerleitung entschieden wurde, ob zusätzlich zu der normalen gegen Erdpotential negativen Batterieversorgungsspannung die erwähnte Booster-Spannung zu schalten ist und dann durch einen entsprechenden Software-Befehl die Schaltung der Zusatzspannung veranlaßt. Es wurde dabei zwischen den einzelnen Betriebsarten der Teilnehmeranschlußleitung nicht unterschieden und insbesondere im Betriebszustand "Ruf" sowohl in der Rufphase als auch in der Rufpause bei entsprechender Leitungslänge mit der erhöhten Versorgungsspannung gearbeitet. Siehe auch EP-A 0 048 477.

Es liegt damit einerseits im Hinblick auf die Berücksichtigung der Leitungslänge ein relativ unflexibles Konzept vor, andererseits wird eine größere Verlustleistung in Kauf genommen, als dies im Hinblick auf eine ausreichende Stromversorgung erforderlich wäre. Wegen der Zusammenfassung mehrerer Teilnehmeranschlußschaltungen zu einer Baugruppe, die in Zukunft eine noch größere Anzahl von Teilnehmeranschlußschaltungen als bisher umfassen soll, ist die Begrenzung der Verlustleistung ein besonders wichtiger Gesichtspunkt.

Die Aufgabe der Erfindung besteht daher darin, eine Schaltungsanordnung zur Konstantstromspeisung der eingangs genannten Art so auszugestalten, daß die erwähnten Probleme nicht mehr auftreten.

Erfindungsgemäß wird dies erreicht durch Tiefpaßfilter mit über der Rufsignalfrequenz liegender Grenzfrequenz, die von der Ausgangsspannung der Endstufen der Speiseschaltung der Teilnehmeranschlußschaltung beaufschlagt werden, ferner durch Vergleicherschaltungen, die jeweils das Ausgangssignal eines Tiefpaßfilters mit wenigstens einem Grenzwert vergleichen, sowie durch diesen Vergleicherschaltungen zugeordnete Umschalteeinrichtungen, die bei Überschreiten oder Unterschreiten eines solchen Grenzwerts eine Umschaltung auf eine höhere bzw. niedrigere Versorgungsspannung der Endstufen der Speisespannung vornehmen.

Mit Hilfe der erfindungsgemäßen Schaltungsanordnung wird also dauernd die Ausgangsspannung der Endstufen der Speiseschaltung überwacht, so daß eine dauernde Anpassung an die aktuellen Verhältnisse gegeben ist. Darüber hinaus bewirkt die erfindungsgemäße Schaltungsanordnung, daß während des Betriebszustands "Ruf" in der Rufpause, in der die Endstufen der Speiseschaltung eine niedrige Spannung abgeben, die Zusatzversorgungsversorgungsspannung abgeschaltet wird und damit das Entstehen unnötiger Verlustleistung vermieden ist.

Bei einem ersten Ausführungsbeispiel der Erfindung ist nur ein Grenzwert für die Ausgangsspannung der Endstufen der Speiseschaltung vorgesehen. Bei Überschreiten dieses Grenzwerts wird zusätzlich zu einer gegenüber dem Bezugspotential Erde negativen Versorgungsspannung für diese Endstufen eine gegenüber Erdpotential positive Versorgungsspannung wirksam geschaltet.

Bei einem zweiten Ausführungsbeispiel sind zwei Grenzwerte vorgesehen, wobei beim Überschreiten des ersten Grenzwerts statt einer gegen Erdpotential negativen Versorgungsspannung für die Endstufen der Speiseschaltung eine demgegenüber höhere negative Versorgungsspannung wirksam geschaltet wird, und bei Überschreiten des zweiten Grenzwerts zusätzlich zu der dann herrschenden Versorgungsspannung eine gegenüber Erdpotential positive Zusatzversorgung spannung zugeschaltet wird.

Nachstehend wird die erfindungsgemäße Schaltungsanordnung anhand von den erwähnten beiden Ausführungsbeispielen unter Bezugnahme auf eine Zeichnung näher erläutert.

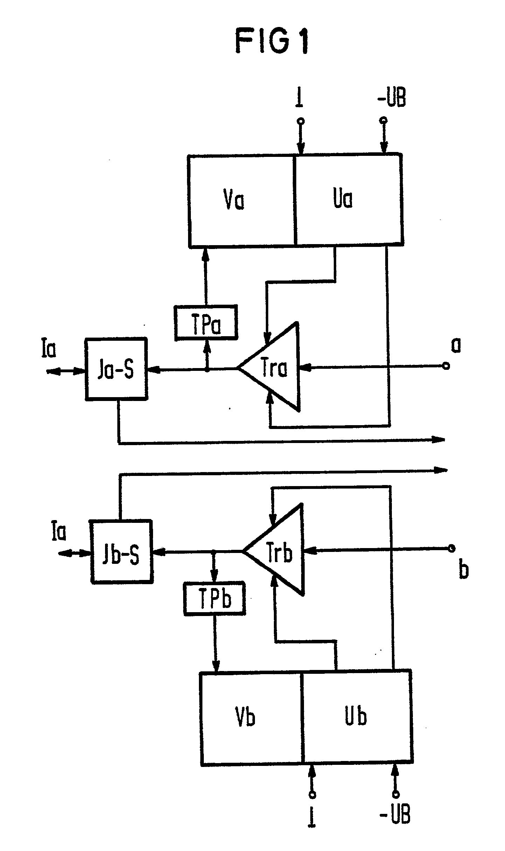

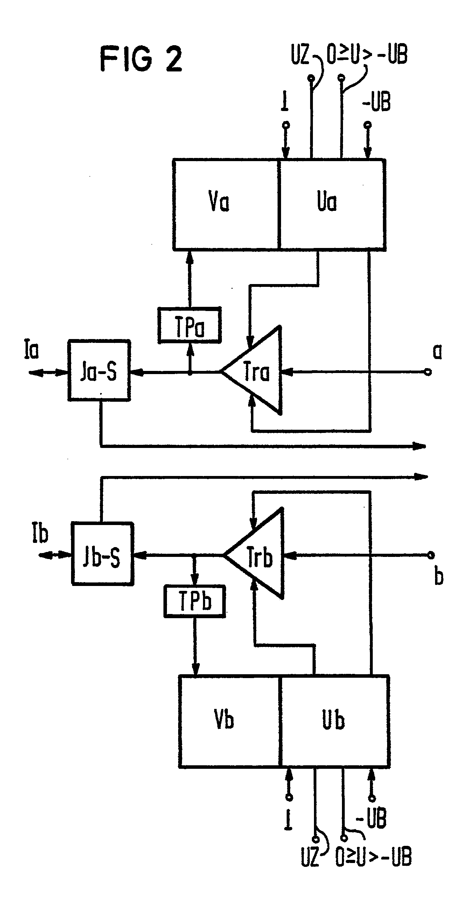

In der Zeichnung zeigen die Figur 1 ein erstes und die Figur 2 ein zweites Ausführungsbeispiel der erfindungsgemäßen Schaltungsanordnung.

In der Figur 1 sind als Bestandteile einer elektronischen Teilnehmeranschlußschaltung für eine Teilnehmeranschlußleitung Endstufen Tra und Trb einer Speiseschaltung zur Konstantstromspeisung, über die die Leitungsadern der Teilnehmeranschlußleitung mit Speisestrom versorgt werden, sowie diesen Adern zugeordnete Stromsensoren la-S und lb-S dargestellt, deren Ausgangssignale in nicht dargestellter Weise einer Indikationsschaltung zur Ermittlung der Leitungszustände zugeführt werden.

Als Versorgungsspannung für die Endstufen Tra und Trb dient normalerweise eine gegen Erdpotential negative Versorgungsspannung -UB.

Zur eigentlichen erfindungsgemäßen Schaltungsanordnung gehören Tiefpässe TPa und TPb, die an den Ausgang der Endstufe Tra bzw. der Ausgangsstufe Trb angeschlossen sind. Ihre Grenzfrequenz liegt über der Frequenz der Rufsignalspannung.

Die Ausgangssignale dieser Tiefpässe werden einer Vergleicherschaltung Va bzw. Vb zugeführt. Mit Hilfe dieser Vergleicherschaltungen wird festgestellt, ob das Ausgangssignal des entsprechenden Tiefpasses einen vorgegebenen Grenzwert überschreitet oder unterschreitet.

Beim Überschreiten des Grenzwertes wird durch eine den Vergleichern jeweils nachgeschaltete Umschalteeinrichtung Ua bzw. Ub an die betreffende Endstufe Tra bzw. Trb anstelle des Bezugspotentials Erde eine Zusatzspannung Uz angelegt, die gegenüber dem Bezugspotential positiv ist.

Zum Überschreiten des genannten Grenzwertes durch die Ausgangsspannung der Endstufen Tra, Trb kommt es, wenn die Länge der Teilnehmeranschlußleitung einen vorgegebenen Wert überschreitet. Im Betriebszustand "Ruf" wird während der Rufpause dieser Grenzwert auch bei ansonsten eine Zuschaltung der Zusatzspannung rechtfertigender Leitungslänge nicht erreicht bzw. unterschritten, so daß dann durch die Umschalteeinrichtungen die Zuschaltung der Zusatzspannung unterbleibt bzw. wieder rückgängig gemacht wird. Die Zuschaltung der Zusatzspannung erfolgt also nur dann, wenn sie tatsächlich erforderlich ist, nämlich jeweils während der Rufphase.

Ein Ansteigen der Ausgangsspannung der Endstufen aufgrund von dem Speisestrom überlagerten Sprachsignalströmen bleibt wegen der gewählten Grenzfrequenz der Tiefpässe ohne Einfluß auf die Umschalteeinrichtungen.

Die Zuschaltung der Zusatzspannung kommt im Betriebszustand "Ruhe" nicht in Frage, was bedeutet, daß dann, wenn durch die erwähnte Indikationsschaltung eine Schleifenunterbrechung durch Auflegen beim Teilnehmer festgestellt worden ist, eine gegebenenfalls vorhandene Zusatzspannung wieder weggeschaltet wird.

Das Ausführungsbeispiel gemäß Figur 2 unterscheidet sich von demjenigen gemäß Figur 1 dadurch, daß die Vergleicher Va und Vb einen Vergleich mit zwei Grenzwerten vornehmen. Es unterscheidet sich ferner durch eine modifizierte Wirkungsweise der Umschalter Ua und Ub, die bei Überschreiten des genannten ersten Grenzwertes eine Umschaltung einer gegen Erdpotential negativen Betriebsversorgungsspannung für die Endstufen Tra und Trb, die kleiner ist als eine Betriebsversorgungsspannung -UB auf den Wert dieser Betriebsversorgungsspannung -UB umschalten, bzw. bei Unterschreiten dieses ersten Grenzwertes wieder zurückschalten und dadurch daß bei Überschreiten des zweiten Grenzwertes zusätzlich zu der Betriebsversorgungsspannung -UB die gegen Erdpotential positive Zusatzspannung UZ zugeschaltet bzw. bei Unterschreiten des zweiten Grenzwertes wieder weggeschaltet wird.

Auf diese Art und Weise kann die Betriebsspannung der Ausgangsstufe in noch differenzierterer Weise an die Änderung der Leitungslänge angepaßt und damit die Verlustleistung noch weiter reduziert werden.

Die Zuschaltung der Zusatzspannung sowie die Umschaltung auf eine andere Betriebsspannung derselben Polarität wird immer einem jeweils einer Gruppe von Teilnehmeranschlußschaltungen zugeordneten Gruppenprozessor signalisiert, der damit in der Lage ist, die bei der einzelnen Teilnehmeranschlußschaltung getroffene diesbezügliche Entscheidung gegebenenfalls aus übergeordneten Gesichtspunkten zu korrigieren.

## Patentansprüche

1. Schaltungsanordnung zur Konstantstromspeisung der Teilnehmerleitung eines digitalen Zeitmultiplex-Fernmeldenetzes, die Bestandteil einer elektronischen Teilnehmeranschlußschaltung ist und die je nach der Länge der Teilnehmerleitung unterschiedliche Speiseversorgungsspannungen zur Verfügung stellt, **gekennzeichnet** durch Tiefpaßfilter (TPa, TPb) mit über der Rufsignalfrequenz liegender Grenzfrequenz, die von der Augangsspannung der Endstufen (Tra, Trb) der Speiseschaltung der Teilnehmeranschlußschaltung beaufschlagt werden, durch Vergleicherschaltungen (Va, Vb), die jeweils das Ausgangssignal eines Tiefpaßfilters mit wenigstens einem Grenzwert vergleichen, sowie durch diesen Vergleicherschaltungen zugeordnete Umschalteeinrichtungen (Ua, Ub). die bei Überschreiten oder Unterschreiten eines solchen Grenzwerts eine Umschaltung auf eine höhere bzw. niedrigere Versorgungsspannung der Endstufen der Speiseschaltung vornehmen.

2. Schaltungsanordnung nach Anspruch 1, bei der die Vergleicherschaltungen jeweils ein Vergleich mit einem einzigen Grenzwert vornehmemn, **dadurch gekennzeichnet**, daß bei Überschreiten des Grenzwerts an die Endstufen (Tra, Trb) der Speiseschaltung zusätzlich zu der herrschenden Versorgungsspannung eine gegenüber dem Bezugspotential (Erde) dieser Versorgungsspannung (-UB) entgegengerichtete Zusatzversorgungsspannung (UZ) wirksam geschaltet wird bzw. bei Unterschreiten des Grenzwerts diese Zusatzversorgungsspannung wieder abgeschaltet wird.

3. Schaltungsanordnung nach Anspruch 1, bei der die Vergleicherschaltungen jeweils einen Vergleich mit zwei Grenzwerten vornehmen, **dadurch gekennzeichnet**, daß bei Überschreiten des ersten Grenzwerts die herrschende Versorgungsspannung ($0 \geqq U \geqq -UB$) der Endstufe (Tra, Trb) der Speiseschaltung auf einen höheren Wert (-UB) bezüglich des Bezugspotentials (Erde) umgeschaltet wird und daß bei Überschreiten des zweiten Grenzwerts zusätzlich zu der dann herrschenden Versorgungsspannung (-UB) eine gegenüber dem Bezugspotential (Erde) dieser Versorgungsspannung entgegengerichtete Zusatzversorgungsspannung (Uz) wirksam geschaltet wird bzw. bei Unterschreiten eines der Grenzwerte die entsprechende Schaltmaßnahme wieder rückgängig gemacht wird.

## Claims

1. Circuit arrangement for continually feeding a current to the subscriber line of a digital time division multiplex telecommunication network , which circuit arrangement is a component of an electronic subscriber connection circuit and which makes various feed supply voltages available according to the length of the subscriber line, characterized by low-pass filters (TPa, TPb) with a threshold frequency lying above the call signal frequency, which low-pass filters are loaded by the output voltage of the final output stages (Tra, Trb) of the feed voltage of the subscriber connection circuit, by comparator circuits (Va, Vb) which in each case compare the output signal of a low-pass filter with at least one threshold value, and by switch-over devices (Ua, Ub) assigned to these comparator circuits, which switch-over devices, in the case of such a threshold value being exceeded or undershot, perform a switch-over to a higher or lower supply voltage of the final output stages of the feed voltage.

2. Circuit arrangement according to Claim 1, in which the comparator circuits in each case perform a comparison with a single threshold value, characterized in that, in the case of the threshold value being exceeded an additional supply voltage (UZ) which is inverse in relation to the reference potential (earth) of this supply voltage (–UB) is effectively connected to the final output stages (Tra, Trb) of the feed voltage in addition to the prevailing supply voltage and in the case of the threshold value being undershot this additional supply voltage is switched off again.

3. Circuit arrangement according to Claim 1, in which the comparator circuits in each case perform a comparison with two threshold values, characterized in that, in the case of the first threshold value being exceeded, the prevailing supply voltage ($0 \geq U \geq -UB$) of the final output stage (Tra, Trb) of the feed circuit is switched over to a higher value (–UB) in relation to the reference potential (earth) and in that, in the case of the second threshold value being exceeded, in addition to the then prevailing supply voltage (–UB) an additional supply voltage (Uz) which is inverse in relation to the reference potential (earth) of the supply voltage is effectively connected and in the case of one of the threshold values being undershot the corresponding switching measure is again cancelled.

## Revendications

1. Montage servant à alimenter avec un courant constant la ligne d'abonné d'un réseau numérique de télécommunications à multiplexage temporel, qui fait partie d'un circuit électronique de raccordement d'abonné et délivre des tensions d'alimentation différentes en fonction de la longueur de la ligne d'abonné, caractérisé par des filtres passe-bas (TPa, TPb), qui possèdent une fréquence limite supérieure à la fréquence du signal d'appel et sont chargés par la tension de sortie des étages finals (Tra, Trb) du circuit d'alimentation du circuit de raccordement d'abonné, par des circuits comparateurs (Va, Vb) qui comparent respectivement le signal de sortie d'un filtre passe-bas à au moins une valeur limite, ainsi que par les dispositifs de commutation (Ua, Ub), qui sont associés à ces circuits comparateurs et qui réalisent, lors du dépassement d'une telle valeur limite par le haut ou vers le bas, une commutation sur une tension d'alimentation supérieure ou inférieure des étages finals du circuit d'alimentation.

2. Montage suivant la revendication 1, dans lequel les circuits comparateurs réalisent respectivement une comparaison par rapport à une valeur limite unique, caractérisé par le fait que, lors du dépassement de la valeur limite vers le haut dans les étages finals (Tra, Trb) du circuit d'alimentation, une tension d'alimentation supplémentaire (UZ), dirigée en sens opposé de cette tension d'alimentation (–UB) par rapport au potentiel de référence (terre), est appliquée, en plus de la tension d'alimentation établie, ou bien lors du dépassement de cette valeur minimale vers le bas, cette tension d'alimentation supplémentaire est à nouveau débranchée.

3. Montage selon la revendication 1, dans lequel les circuits comparateurs procèdent chacun à une comparaison avec deux valeurs limites, caractérisé par le fait qu'en cas de dépassement de la première valeur limite, la tension d'alimentation ($O \geq U \geq -UB$) de l'étage final (Tra, Trb) du circuit d'alimentation, qui prévaut, est commutée à une valeur plus grande (–UB) par rapport au potentiel de référence (terre), et qu'en cas de dépassement de la seconde valeur limite, on ajoute, en plus, à la tension d'alimentation (–UB) qui prévaut alors, une tension d'alimentation supplémentaire (Uz) dirigée en sens opposé par rapport au potentiel de référence (terre) de cette tension d'alimentation, alors que dans le cas du passage endessous de l'une des valeurs limites, les mesures correspondantes de commutation sont annulées.

# FIG 1

FIG 2